# DEMANDE DE BREVET EUROPEEN

(11) **EP 1 693 939 A2**
(43) Date de publication de la demande: **23.08.2006**
(21) Numéro de dépôt: 06290269.7
(22) Date de dépôt: 16.02.2006
(51) Int. Cl.: H02G 3/22, B60R 16/02

(54) **Dispositif de connexion pour le passage et la protection de câbles électriques, ou analogues**

(30) Priorité: 16.02.2005 FR 0501583
(71) Demandeur: CF Gomma Spa, 25050 Passirano (Brescia) (IT)
(72) Inventeur: Bloret, Jean-Pierre, 35700 Rennes (FR); Gourvellec, Philippe, 35160 Talensac (FR)
(74) Mandataire: Breese Derambure Majerowicz

(57) **Abrégé**

La présente invention se rapporte à un dispositif de connexion (1) pour le passage et la protection de câbles électriques, ou analogues, comportant un corps souple (5) aux deux extrémités duquel est présent respectivement un moyen de fixation. L'un de ces moyens de fixation comprend un cylindre souple (8) formant un seul bloc venant de moulage avec ledit corps souple et une bague rigide insérée dans un logement périphérique (22) de ladite partie souple après moulage.

## Description

La présente invention se rapporte au domaine des dispositifs de connexion, de type fourreau coudé ou passe gaine, et de sécurité pour le passage de câbles électriques ou analogues. La présente invention se rapporte plus particulièrement à ce type de dispositifs de connexion utilisés dans les véhicules automobiles, notamment au niveau de la jonction entre l'habitacle et les ouvrants, portes, coffre, hayon.

Un tel fourreau, lorsqu'il s'étend entre deux éléments qui peuvent se mouvoir l'un par rapport à l'autre, doit pouvoir se déformer. Avantageusement, il est réalisé en un matériau déformable élastiquement. Or, par exemple dans un véhicule automobile, il est souhaitable que les moyens de fixation du fourreau respectivement sur la caisse et sur un ouvrant soient rigides notamment pour assurer le clippage et la retenue optimisée.

L'art antérieur connaît déjà des dispositifs de connexion pour la protection et le passage de câbles électriques dans des voitures, au niveau des ouvertures de portes, constitués de parties en thermoplastique et en élastomère assemblées par la technique dite de « soudure lame chaude ».

Ces types de dispositifs de connexion sont coûteux car ils nécessitent de la main d'oeuvre ou une robotisation importante, en particulier pour réaliser les opérations de soudure après moulage des divers éléments constitutifs.

La présente invention entend remédier aux inconvénients de l'art antérieur en proposant un dispositif de connexion à partie centrale souple et extrémités rigides simples et peu coûteuses.

Pour ce faire, la présente invention concerne un dispositif de connexion pour le passage et la protection de câbles électriques, ou analogues, comportant un corps souple pourvu à ses deux extrémités de moyens de fixation, caractérisé en ce qu'au moins un premier moyen de fixation comprend une partie souple et une partie rigide, ladite partie souple et ledit corps formant un seul bloc venant de moulage, et ladite partie rigide est insérée dans un logement de ladite partie souple après moulage.

La partie rigide formant insert rapporté permet de rigidifier la partie souple au niveau de l'interface. Une telle partie rigide, qui peut se présenter simplement sous la forme d'une bague, est très simple à positionner que ce soit manuellement ou automatiquement. Le fait que cette partie rigide soit assemblée après moulage est avantageux en ce que les opérations de démoulage ne sont pas compliquées par la présence d'une partie rigide.

Avantageusement, la partie souple dudit premier moyen de fixation, adaptée à être emmanchée dans un trou, comprend un logement périphérique adapté à recevoir ladite partie rigide, en forme de bague, dudit premier moyen de fixation.

Cette bague rigide logée à la périphérie de la partie souple permet de rigidifier cette dernière au niveau de son interface de fixation.

Avantageusement, ladite partie rigide en forme de bague et le logement destiné à l'accueillir ont des sections correspondantes de formes légèrement coniques.

Cette forme particulière permet d'améliorer la tenue de la bague dans le logement périphérique.

Avantageusement, des encoches sont ménagées à intervalle régulier sur ladite partie rigide dudit premier moyen de fixation de manière à diminuer la masse de matière de cette dernière.

Avantageusement, lesdites encoches sont ménagées symétriquement de part et d'autre de ladite partie rigide dudit premier moyen de positionnement. De la sorte l'insert peut être installé sur le dispositif quel que soit le sens dans lequel il est présenté, ce qui simplifie grandement le procédé de montage.

Avantageusement, ladite partie souple dudit premier moyen de fixation comprend des moyens de verrouillage par déformation élastique.

La bague rigide placée à la périphérie de la partie souple forme support rigide des moyens de verrouillage de la partie souple permettant la fixation optimisée par clippage.

Selon un mode de réalisation de la présente invention, un second moyen de fixation est en une matière rigide, l'ensemble constitué par ledit corps et ledit second moyen de fixation formant un seul bloc venant de moulage.

Le deuxième moyen de fixation rigide et le corps souple sont associés, ou fixés, l'un à l'autre grâce à des liaisons physico-chimiques existants entre les deux matières lors du moulage. Cet ensemble, qui peut être obtenu par injection bi-matière, forme un fourreau bi-matière. L'insert formant le premier moyen de fixation est assemblé sur ce fourreau bi-matière après le démoulage de ce dernier.

Le fait que le corps et le deuxième moyen de fixation viennent de moulage permet un gain de production important par rapport aux techniques comme la technique dite de « soudure lame chaude ».

Le fait qu'au moins une extrémité du dispositif moulé est souple permet un démoulage facile.

Dans le cas des dispositifs de connexion utilisés dans les véhicules automobiles, le deuxième moyen de fixation est avantageusement clippé à une tôle de la caisse, tandis que le premier moyen de fixation est clippé sur un ouvrant comme par exemple une porte.

Alternativement, selon un autre mode de réalisation, un second moyen de fixation comprend également une partie souple formant un seul bloc venant de moulage avec ledit corps et une partie rigide insérée dans un logement de ladite partie souple après moulage.

Avantageusement, les parties rigides des premier et second moyens de fixation sont identiques. Autrement dit, il n'y a besoin de prévoir la fabrication que d'un seul type d'insert pour la rigidification des deux extrémités de fixation.

Avantageusement, ledit deuxième moyen de fixation comprend une pluralité d'éléments de clippage.

Avantageusement, ledit deuxième moyen de fixation comprend au moins une languette d'accrochage.

Avantageusement, ledit corps souple comprend une partie présentant une forme en accordéon pour faciliter l'extension et la compression de sa longueur ainsi que sa déformation dans tous les plans.

Avantageusement, chacun desdits moyens de fixation comprend au moins un moyen d'étanchéité, tel que par exemple une lèvre souple.

Avantageusement, chacun desdits moyens de fixation a une forme adaptée à être emmanchée dans un trou de forme donnée. Par exemple, le moyen de fixation est cylindrique de section adaptée à la section du trou de fixation : circulaire, ovale, etc.

On comprendra mieux l'invention à l'aide de la description, faite ci-après à titre purement explicatif, de deux modes de réalisation de l'invention, en référence aux figures annexées parmi lesquelles :
la figure 1 illustre une vue en perspective du dispositif de connexion selon un mode de réalisation de l'invention, un insert de rigidification étant représenté hors de son logement,
la figure 2 est une vue en coupe axiale du dispositif de la figure 1 associée à une vue de face d'une extrémité de ce dispositif,
la figure 3 est une vue en coupe axiale d'un dispositif de connexion selon un autre mode de réalisation de l'invention, deux inserts de rigidification étant représentés hors de leurs logements.

Dans les exemples choisis pour illustrer l'invention, le dispositif de connexion 1 pour câble électrique, ou analogues, également dénommé le fourreau de faisceau, est un ensemble ayant pour fonction d'assurer la protection entre la caisse d'un véhicule automobile et les ouvrants, en particulier les portes et volets.

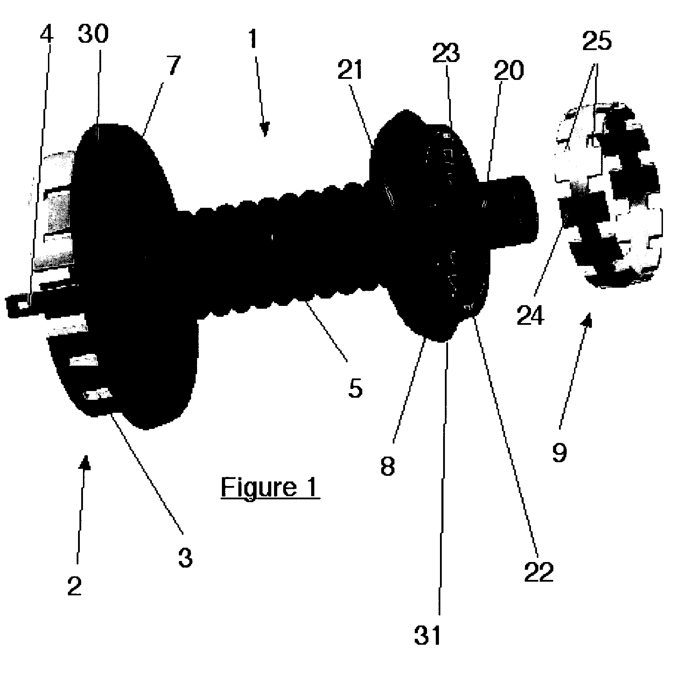

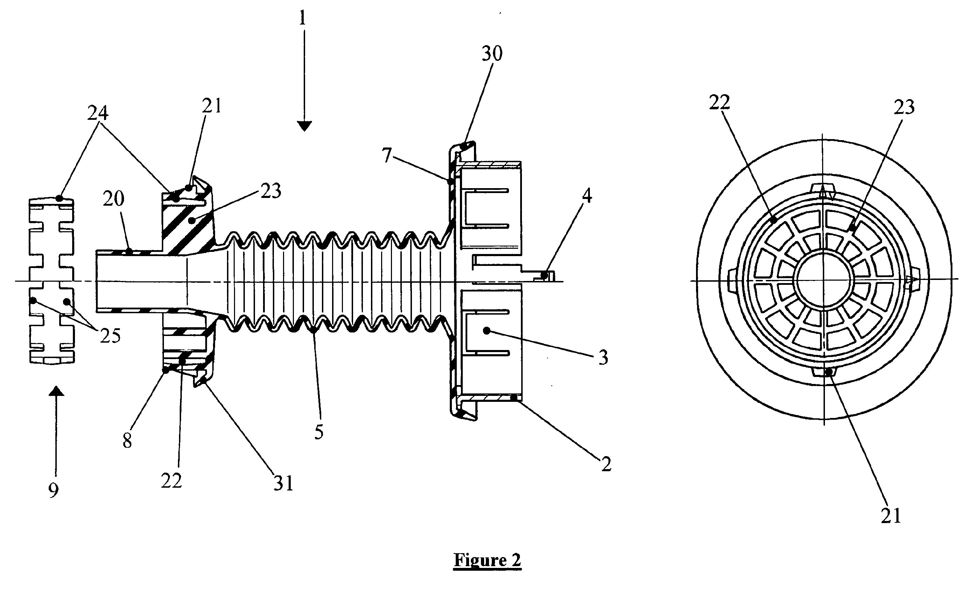

Le dispositif de connexion selon un premier mode de réalisation de l'invention représenté sur les figures 1 et 2 l'invention est constituée de deux parties :
- un fourreau bi-matière constitué par un corps souple 5 associé à un élément rigide 2 intervenant au niveau de l'une des extrémités du corps 5, l'ensemble formant un seul bloc venant de moulage,
- un insert rigide 9 adapté à être logé dans l'extrémité du corps 5 opposée à l'extrémité au niveau de laquelle intervient l'élément rigide 2.

Le corps souple 5 comprend une partie centrale sensiblement tubulaire dont les parois sont ondulées et deux parties d'extrémités 7 et 8.

Dans l'exemple représenté, le corps 5 est en Thermoplastique élastomère de dureté 50 Shore A, tel le SEBS (styrène éthylène butadiène -styrène) ou polypropène EPDM (Ethylène propylène diène monomère dit « santoprène »). L'insert 9 et l'élément rigide 2 sont en matériau rigide comme le polypropène qui peut être chargé de fibres de verre.

La partie d'extrémité 8 comporte une partie cylindrique formant la partie souple d'un moyen de fixation sur ouvrant par emmanchement dans un trou. La section de la partie cylindrique, correspondant à la section du trou, peut être circulaire, ovale ou autre. Une lèvre d'étanchéité périphérique 31 empêche la pénétration de l'eau, de l'air, de la poussière, etc... Un embout cylindrique 20 permet l'enrubannage du faisceau électrique assurant ainsi le positionnement du fourreau sur le faisceau si nécessaire.

Des surépaisseurs 21 formant clips de verrouillage 21 (au nombre de quatre dans l'exemple représenté) sont ménagées sur la paroi extérieure du cylindre de fixation 8. En pratique, ces clips de verrouillage 21 sont constitués par des surépaisseurs formant des plans inclinés vers l'axe du dispositif en direction de l'extérieur et terminés, vers l'intérieur, par un épaulement. Ces clips de verrouillage sont progressivement écrasés lors de l'emmanchement dans le trou correspondant puis se relâchent après passage de l'épaulement.

Des nervures de renforcement sont ménagées entre l'embout 20 et la paroi intérieure de la partie cylindrique de fixation. Il s'agit de nervures radiales qui s'étendent de l'embout cylindrique 20 et de nervures axiales formant des cylindres s'étendant entre ces nervures radiales. La dernière nervure axiale est située juste avant le cylindre 8 de manière à définir entre elle et ce dernier un logement périphérique 22 de taille adaptée à recevoir l'insert 9. Les nervures radiales (au nombre de 16 dans l'exemple représenté) sont disposées à intervalle angulaire régulier. Chaque surépaisseur 21 se trouve en regard d'une nervure radiale.

La partie d'extrémité 7 comporte une lèvre périphérique 30 assurant la même fonction que la lèvre 31. L'élément rigide 2 se présente sous forme d'une bague fixée par l'une de ses extrémités à une paroi du corps souple s'étendant entre l'ouverture de la partie centrale et la lèvre d'étanchéité périphérique. La liaison au niveau de l'interface entre la partie élastique et la partie rigide est assurée par une réaction physico-chimique entre les deux matériaux lors du moulage. L'élément rigide 2 formant moyen de fixation sur caisse a pour fonction de se clipper sur une tôle de la caisse. La forme de cet élément rigide, par exemple une bague circulaire ou ovale, correspond à la forme d'un trou dans lequel cet élément rigide peut être emmanché. Pour ce faire, il comporte des clips de verrouillage 3 (quatre dans l'exemple représenté) servant à l'accrochage sur le trou de passage des fils, ou câbles électriques, dans la caisse. Des languettes d'accrochage 4 (deux dans l'exemple représenté) servent à l'assemblage de connecteur électrique.

L'insert 9 se présente sous forme d'une bague circulaire de taille adaptée à être insérée dans le logement 22.

Ainsi qu'on le voit mieux sur la figure 2 la section de cet insert 9 a une forme généralement conique. Plus précisément, cette section est rectangulaire vers l'intérieur de la bague et, vers l'extérieur, elle se rétrécit vers une ligne de sommet 24 dans le plan médian de la bague. Le logement 22 a une forme conique correspondante, de sorte que, lorsque l'insert 9 est inséré dans le logement 22, il y est maintenu immobile avec une bonne tenue.

Des encoches 25 sont ménagées de part et d'autre de l'insert 9, de manière symétrique. Ces encoches 25 sont disposées à intervalle régulier sur la périphérie de l'insert 9, de manière à former des créneaux. Ces rainures permettent d'alléger l'insert 9 et, par conséquent, de diminuer son prix.

L'insert 9 est inséré dans le logement 22 de manière à former partie rigide d'un moyen de fixation sur ouvrant. Une fois inséré, il se trouve contre la paroi intérieure du cylindre 8 et assure par conséquent la rigidification de l'interface de fixation. L'insert est monté sans repérage et indifféremment dans un sens ou dans l'autre.

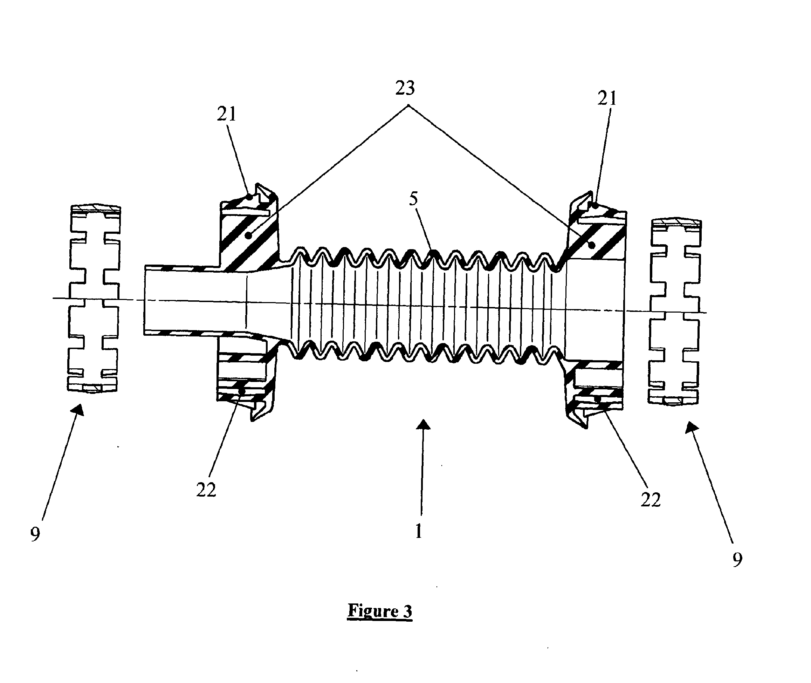

Selon un autre mode de réalisation de la présente invention représenté sur la figure 3, le dispositif de connexion est constitué d'un fourreau souple 5 adapté à recevoir, au niveau de l'une et l'autre de ses extrémités, deux inserts rigides 9.

Le corps souple 5 comprend, comme dans le mode de réalisation précédent, une partie centrale sensiblement tubulaire dont les parois sont ondulées et deux parties d'extrémités 23 de formes adaptées à l'emmanchement dans des trous respectifs : par exemple de formes cylindriques de sections circulaires ou ovales.

La partie d'extrémité comportant l'embout cylindrique permettant l'enrubannage du faisceau électrique ainsi que le positionnement du fourreau si nécessaire est la même que celle décrite dans le mode de réalisation précédent.

En revanche, l'autre partie d'extrémité est différente que dans le mode de réalisation précédent. A l'exception de l'embout cylindrique, elle est identique à l'autre extrémité. Les nervures de renforcement radiales partent d'une première nervure axiale qui prolonge sensiblement la partie centrale tubulaire du corps 5. Des surépaisseurs 21 constituent des clips de verrouillage par déformation élastique. Un logement 22 permet l'insertion d'un insert 9.

L'insert 9 est identique à l'insert précédemment décrit. Il n'y a donc besoin de prévoir la fabrication que d'un seul modèle d'insert qui peut être inséré dans le logement 22 de l'une ou l'autre extrémité 23. Cet insert est monté sans repérage et indifféremment dans un sens ou dans l'autre.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif de connexion (1) pour le passage et la protection de câbles électriques ou analogues comportant un corps souple (5) pourvu à ses deux extrémités de moyens de fixation (2, 8) **caractérisé en ce qu'**au moins un premier moyen de fixation (8) comprend une partie souple (8) et une partie rigide (9), ladite partie souple et ledit corps formant un seul bloc venant de moulage, ladite partie souple étant adaptée à être emmanchée dans un trou, et ladite partie rigide étant insérée dans un logement (22) à l'intérieur de ladite partie souple après moulage.

2. Dispositif de connexion selon la revendication 1,
**caractérisé en ce que** ladite partie rigide (9) est en forme de bague et ladite partie souple (8) comprend un logement périphérique (22) adapté à recevoir ladite partie rigide.

3. Dispositif de connexion selon la revendication 2,
**caractérisé en ce que** ladite partie souple (8) dudit premier moyen de fixation comprend des moyens de verrouillage par déformation élastique (21).

4. Dispositif de connexion selon la revendication 3,
**caractérisé en ce que** des encoches (25) sont ménagées à intervalle régulier sur ladite partie rigide (9).

5. Dispositif de connexion selon la revendication 4,
**caractérisé en ce que** lesdites encoches (25) sont ménagées symétriquement de part et d'autre de ladite partie rigide (9) dudit premier moyen de positionnement.

6. Dispositif de connexion selon l'une quelconque des revendications précédentes, **caractérisé en ce qu'**un second moyen de fixation (2) est en une matière rigide, l'ensemble constitué par ledit corps (5) et ledit second moyen de fixation formant un seul bloc venant de moulage.

7. Dispositif de connexion selon la revendication 6,
**caractérisé en ce que**, ledit dispositif de connexion (1) étant utilisé pour un véhicule automobile, le deuxième moyen de fixation (2) est avantageusement clippé à une tôle de la caisse, tandis que le premier moyen de fixation (8) est clippé sur un ouvrant comme par exemple une porte.

8. Dispositif de connexion selon l'une quelconque des revendications précédentes, **caractérisé en ce qu'**un second moyen de fixation comprend également une partie souple (23) formant un seul bloc venant de moulage avec ledit corps et une partie rigide (9) insérée dans un logement de ladite partie souple après moulage.

9. Dispositif de connexion selon la revendication 8,
**caractérisé en ce que** les parties rigides (9) des premier et second moyens de fixation (23) sont identiques.

10. Dispositif de connexion selon l'une quelconque des revendications précédentes, **caractérisé en ce que** ledit corps souple (5) comprend une partie présentant une forme en accordéon pour faciliter l'extension et la compression de sa longueur ainsi que sa déformation dans tous les plans.

11. Dispositif de connexion selon l'une quelconque des revendications précédentes, **caractérisé en ce que** chacun desdits moyens de fixation (2, 8 ; 23) comprend au moins un moyen d'étanchéité (30, 31), tel que par exemple une lèvre souple.

12. Dispositif de connexion selon l'une quelconque des revendications précédentes, **caractérisé en ce que** chacun desdits moyens de fixation (2, 8 ; 23) a une forme adaptée à être emmanchée dans un trou de forme donnée.
